# EUROPÄISCHE PATENTANMELDUNG

(11) **EP 0 869 033 A2**
(43) Veröffentlichungstag der Anmeldung: **07.10.1998**
(21) Anmeldenummer: 98104678.2
(22) Anmeldetag: 16.03.1998
(51) Int. Cl.: B60R 7/02

(54) **Einrichtung zum Sichern von Ladegut in Kraftfahrzeugen**

(30) Priorität: 01.04.1997 AT 542/97
(71) Anmelder: Blumer, Konrad, 9475 Sevelen (CH)
(72) Erfinder: Blumer, Konrad, 9475 Sevelen (CH)
(74) Vertreter: Hefel, Herbert, Dipl.-Ing.

(57) **Zusammenfassung**

Die Einrichtung zum Sichern von Ladegut (12) im Lade- oder Kofferraum eines Kraftfahrzeuges weist eine an die umfänglichen Abmessungen des jeweiligen Lade- oder Kofferraumes angepaßte Bodenplatte auf. In dieser Bodenplatte (1) sind rastermäßig verteilte Vertiefungen (5) vorgesehen, in welche Stäbe (8) oder Rohre in Anpassung an die Umrisse des zu sichernden Ladegutes (12) einsteckbar sind. Die Bodenplatte (1) ist zweigeteilt und besteht aus zwei symmetrischen Hälften (3, 4). Die Teilungsebene (E) der Bodenplatte (1) liegt in der Längsmittelebene des sie aufnehmenden Lade- oder Kofferraumes.

## Beschreibung

Die Erfindung bezieht sich auf eine Einrichtung zum Sichern von Ladegut im Lade- oder Kofferraum eines Kraftfahrzeuges mit einer an die umfänglichen Abmessungen des jeweiligen Lade- oder Kofferraumes angepaßten Bodenplatte, die rastermäßig verteilte Vertiefungen aufweist, in welche Stäbe oder Rohre in Anpassung an die Umrisse des zu sichernden Ladegutes einsteckbar sind.

Einrichtungen dieser und ähnlicher Art sind bekannt: DE 24 43 882 B; DE 25 38 394 B; DE 27 27 784 B; DE 36 22 018 A1. Die Bodenplatte ist dabei hinsichtlich ihrer Randkontur zur Gänze dem Umfang des Lade- oder Kofferraumes angepaßt und einstückig aus einem Kunststoffspritzgußteil ausgebildet (DE 27 27 784 B). Da der Lade- bzw. Kofferraum von Fahrzeug zu Fahrzeug unterschiedliche Konturen aufweist, muß für die Herstellung einer solchen Bodenplatte für verschiedene Fahrzeugtypen eine Vielzahl von teuren Spritzgußformen bereitgehalten werden. Dies verursacht einen hohen und nicht marktfähigen Preis, so daß sich eine Einrichtung dieser Art nicht hat durchsetzen können.

Bei einer anderen Einrichtung dieser Art (DE 24 43 882 B) ist die Bodenplatte oder Matte aus einem elastomeren Material wie Gummi oder Kunststoff gefertigt und kann entsprechend der Umfangskontur des Koffer- oder Laderaumes mit relativ einfachen Mitteln zugeschnitten werden. Diese Platte oder Matte besitzt an ihrer Oberfläche eine Vielzahl von zylindrischen Zapfen mit einem pilzartig verbreiteten oberen Ende, auf welche plattenförmige, rechteckige Halter aufsteckbar sind. Um eine Bodenplatte dieser Art herstellen zu können, sind sehr teure Werkzeuge notwendig.

Um diesen Nachteilen zu begegnen, wurden die Bodenplatten unterteilt in eine Vielzahl von in der Regel quadratischen Elementen. Auch diese Elemente müssen z.T. zugeschnitten werden, damit mit ihnen der Kofferraum bzw. die Ladefläche belegt werden kann. Diese Anpassung erfordert von seiten des Kraftfahrzeugbetreibers einen nicht unerheblichen Arbeitsaufwand, abgesehen davon, daß die Manipulation vieler solcher Elemente aufwendig und mühsam ist.

Ausgehend von diesem Stand der Technik schlägt die Erfindung zur Vermeidung der aufgezeigten Nachteile vor, daß die Bodenplatte zweigeteilt ist und aus zwei symmetrischen Hälften besteht, wobei die Teilungsebene der Bodenplatte in der Längsmittelebene des sie aufnehmenden Lade- oder Kofferraumes liegt.

Um die Erfindung zu veranschaulichen, wird sie im folgenden anhand eines Ausführungsbeispieles näher beschrieben. Es zeigen:
- Fig. 1: eine Bodenplatte in Draufsicht;
- Fig. 2: einen Detailschnitt durch eine kegelstumpfartige, randseitig liegende Vertiefung;
- Fig. 3: einen Detailschnitt durch eine kegelstumpfartige, randseitig liegende Vertiefung in einer gegenüber Fig. 2 abgeänderten Form;
- Fig. 4: das eine Ende eines Stabes.
Die einzelnen Abbildungen haben unterschiedliche Maßstäbe.

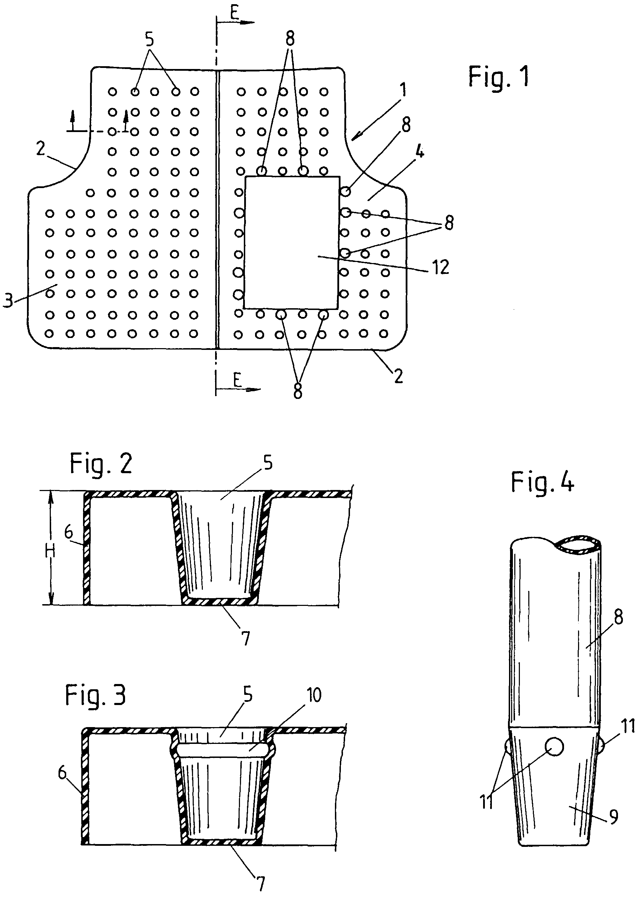

Fig. 1 veranschaulicht in Draufsicht die Bodenplatte 1, deren Umrißkontur 2 genau der Umrißkontur eines Kofferraumes eines bestimmten Kraftfahrzeuges angepaßt ist, für das die Bodenplatte vorgesehen ist. Diese Bodenplatte 1 besteht aus zwei symmetrischen Hälften 3 und 4. Die Teilungsebene E, die rechtwinkelig auf der Zeichenebene in Fig. 1 steht, fällt mit der Längsmittelebene des die Bodenplatte 1 aufnehmenden Kofferraumes oder Laderaumes zusammen. Diese beiden Hälften 3 und 4, die zusammen die die Ebene des Kofferraumes bedeckende Bodenplatte 1 bilden, besitzen eine Vielzahl von rasterartig angeordneten Vertiefungen 5, die kegelstumpfartig ausgebildet sind. Die Bodenplatte 1 bzw. deren beide Hälften 3, 4 sind aus einer Kunststoffplatte im Tiefziehverfahren hergestellt. Die Höhe H der seitlichen Ränder 6 entspricht der Höhe der Vertiefung 5, so daß die unteren Kanten der Ränder 6 und die Böden 7 der kegelstumpfartigen Vertiefungen 5 in einer Ebene liegen.

Zu jeder Bodenplatte 1 gehören mehrere Stäbe 8, die evtl. unterschiedliche Länge aufweisen können. Diese Stäbe können rohrartig ausgebildet sein oder einen vollen Querschnitt besitzen. Zumindest das eine Ende 9 dieser Stäbe ist korrespondierend zu den kegelstumpfartigen Vertiefungen 5 ausgebildet, so daß dieser Stab 8 in eine dieser Vertiefungen einsteckbar ist. Diese Stäbe 8 können auch an ihren beiden Enden kegelstumpfartige Verformungen tragen. Der Öffnungswinkel dieser kegelstumpfartigen Vertiefungen 9 ist relativ klein bemessen, so daß der eingesteckte Stab 8 sicher und fest gehalten wird. Um diesen Halt zu verbessern, können die Vertiefungen 5 nahe ihres oberen Randes eine umlaufende Kehlung 10 besitzen, wobei an den Stäben 8 korrespondierend zur Lage dieser Kehlungen 10 noppenartige Erhöhungen 11 angeformt sind, die beim Einstecken der Stäbe 8 in die Vertiefung 5 formschlüssig einrasten.

Die Herstellung einer solchen tiefgezogenen Bodenplatte 1 ist mit geringem Aufwand möglich, was sehr wesentlich und wichtig ist, da ja zu allen verschiedenen Fahrzeugtypen jeweils angepaßte Bodenplatten hergestellt werden müssen. Durch die Zweiteilung werden symmetrische Elemente erhalten, die aufgrund ihrer Größe noch einfach zu manipulieren sind. Durch die Symmetrie der Hälften sind die für die Werkzeuge erforderlichen Zeichnungen mit geringem Aufwand herzustellen.

Beim praktischen Einsatz wird ein Ladegut 12 auf die Bodenplatte 1 aufgelegt und randseitig werden dann mehrere Stäbe 8 eingesteckt, so daß das Ladegut 12 allseitig von Stäben 8 wie von einem Zaun umgeben ist.

### Legende zu den Hinweisziffern:

- 1: Bodenplatte
- 2: Umrißkontur
- 3: Hälfte
- 4: Hälfte
- 5: Vertiefung
- 6: Rand
- 7: Boden
- 8: Stab
- 9: Ende
- 10: Kehlung
- 11: Noppen
- 12: Ladegut

## Patentansprüche

1. Einrichtung zum Sichern von Ladegut im Lade- oder Kofferraum eines Kraftfahrzeuges, mit einer an die umfänglichen Abmessungen des jeweiligen Lade- oder Kofferraumes angepaßten Bodenplatte, die rastermäßig verteilte Vertiefungen aufweist, in welche Stäbe oder Rohre in Anpassung an die Umrisse des zu sichernden Ladegutes einsteckbar sind, dadurch gekennzeichnet, daß die Bodenplatte (1) zweigeteilt ist und aus zwei symmetrischen Hälften (3, 4) besteht, wobei die Teilungsebene (E) der Bodenplatte (1) in der Längsmittelebene des sie aufnehmenden Lade- oder Kofferraumes liegt.

2. Einrichtung nach Anspruch 1, dadurch gekennzeichnet, daß die Vertiefungen (5) in der Bodenplatte (1) zur Aufnahme der Stäbe (8) oder Rohre kegelstumpfartig ausgebildet sind und zumindest jeweils ein Ende (9) der Stäbe (8) oder Rohre eine zu den kegelstumpfartigen Vertiefungen (5) gegengleiche Form besitzt.

3. Einrichtung nach Anspruch 1 oder 2, dadurch gekennzeichnet, daß die Vertiefungen (5) in der Bodenplatte (1) vorzugsweise nahe ihres oberen Randes jeweils eine umlaufende Kehlung (10) aufweisen und die Stäbe (8) oder Rohre an dem in die Vertiefungen (5) rgenden Abschnitt in korrespondierender Lage zu der umlaufenden Kehlung (10) einen Wulst oder noppenartige Erhöhungen (11) aufweisen.

4. Einrichtung nach einem der Ansprüche 1 bis 3, dadurch gekennzeichnet, daß die Bodenplatte (1) aus einer im Tiefziehverfahren umgeformten Kunststoffplatte gefertigt ist.
